# EUROPEAN PATENT APPLICATION

(11) **EP 1 843 133 A1**
(43) Date of publication of application: **10.10.2007**
(21) Application number: 06007411.9
(22) Date of filing: 07.04.2006
(51) Int. Cl.: G01D 5/28, G01D 5/26

(54) **Integrated optical readout for cantilever sensors**

(71) Applicant: Danmarks Tekniske Universitet, 2800 Lyngby (DK)
(72) Inventor: Nordström, Maria, Malmö 21751 (SE); Boisen, Anja, Valby 2500 (DK); Hübner, Jörg, Alsgarde 3140 (DK); Gomez Calleja, Montserrat, Tres Cantos - Madrid 28760 (ES)
(74) Representative: Plougmann & Vingtoft A/S

(57) **Abstract**

The present invention deals with an optical sensor with integrated readout, such as a polymerbased optical sensor. The optical sensor comprises a substrate having an opening, a first portion and at least a second portion, a cantilever suspended over the opening, the cantilever being supported by the substrate along at least the first portion, the cantilever having a free hanging reflector end facing the second portion, a radiation structure positioned at the second portion for directing or emitting radiation towards the reflector end and a receiving structure positioned to receive radiation reflected from the reflector end. The deflection of the cantilever is deduced from a measurement of the received radiation.

## Description

### FIELD OF THE INVENTION

The invention relates to an optical sensor, and in particular to an optical sensor for measuring the deflection of a cantilever. Moreover the invention relates to a method of measuring a deflection of a cantilever, and to a process of fabricating a sensor.

### BACKGROUND OF THE INVENTION

Cantilever-based sensors have been used to monitor different physical and chemical processes by transducing changes in temperature, mass, electromagnetic field or surface stress into a mechanical response. Cantilever-based sensors have a wide range of applications in real-time local monitoring of chemical and/or biological applications.

Different readout principles of cantilever-based sensors have been proposed. The readout principle may be based on the optical leverage principle where a radiation beam is directed to a top or bottom face of the cantilever. In such systems, a movement of the reflected radiation spot is detected. In another type of systems, the readout principle is based on integrated readout. In such systems, a strain sensor is included in the cantilever structure. Deformations of the cantilever can e.g. be detected, by detecting a change in resistance in response to a straining or compression of the strain sensor (i.e. cantilever).

Sensor systems based on the optical leverage principle typically exhibit high sensitivity and low noise, whereas they require external equipment for emitting and detecting radiation. Sensor systems based on an integrated strain sensor can be provided with integrated readout for detecting a deflection of the cantilever, however typically the sensitivity is lower and the noise is higher than for optical systems. Optical systems with an integrated readout have also been proposed.

The published US patent application 2005/0180678 discloses an optical cantilever-based sensor system with an integrated readout. In the patent application a substrate incorporating a mechanical cantilever resonator is disclosed. The cantilever acts as a waveguide. In one embodiment, the cantilever waveguide is suspended over a substrate and a reflector structure or a waveguide facing the free end of the suspended cantilever to receive light transmitted through the waveguide cantilever.

### SUMMARY OF THE INVENTION

The inventors of the present invention have appreciated that an optical sensor with integrated readout is of benefit. The inventors have had the insight that a drawback of the prior art is that noise may be introduced in the transmitted or guided optical signal when the moving cantilever is used as a waveguide. The inventors have in consequence devised the present invention.

The present invention seeks to provide an improved optical sensor with integrated readout. Preferably, the invention alleviates, mitigates or eliminates one or more of the above or other disadvantages singly or in any combination. According to a first aspect of the present invention there is provided an optical sensor comprising:
- a substrate having an opening, a first portion and at least a second portion;
- a cantilever suspended over the opening, the cantilever being supported by the substrate along at least the first portion, the cantilever having a free hanging reflector end facing the second portion;
- a radiation structure positioned at the second portion for directing or emitting radiation towards the reflector end;
- a receiving structure positioned to receive radiation reflected from the reflector end;
wherein the deflection of the cantilever is deduced from a measurement of the received radiation.

The invention provides an optical sensor with integrated readout. The sensor comprises a support structure (i.e. the substrate) for supporting the radiation structure and the receiving structure, as well as a sensing structure being the cantilever. A cantilever may be a micrometer-sized beam attached in one end of the beam. However, in general the term should be construed to include sub-micrometer, micrometer-sized or even larger flexible structures coupled to a sensing means so that deformations of the structure may be deduced. The deformation may be any type of deformation, such as any type of movement of a cantilever. The deformation may be a static or dynamic deformation, such as bending, twisting, oscillating, etc.

The cantilever is having a reflector end, typically being an end face of the cantilever, in which situation the radiation structure is position so that it is facing the direction extending along the cantilever. In another embodiment, the reflector end is a side face of the cantilever, in which situation the radiation structure is positioned so that it is facing the perpendicular direction to the direction extending along the cantilever.

The radiation is typical radiation in the visible range, such as in the wavelength range of 200 nm to 750 nm, however also near-infrared and infrared, such as radiation above 750 nm, e.g. in the range of 1 to 2 µm, as well as near ultraviolet and ultraviolet radiation may be used. Reference made to optical radiation, optical structures or the likes, encompass wavelengths in all of the above-mentioned ranges, as well as structures suitable for handling wavelengths in all of the above-mentioned ranges.

The invention discloses an optical sensor based on a new readout method where the radiation is reflected off a side face of the cantilever, such as an end face, or other side face of the cantilever. The readout principles of the prior art is based on reflection from a top or bottom surface of the cantilever or on using the cantilever as a waveguide. The invention according to the first aspect is particularly but not exclusively advantageous for a number of reasons. The optical sensor enables the use of integrated optical readout of the cantilever deflection, and thereby achieving a sensor which is both compact and which exhibit a low noise level. Moreover, a portable system may be provided which do not bring any or only few limitations upon external equipment, e.g. an external radiation source and/or an external detector. Furthermore, in many applications the sensing structure needs to be replaced in-between measurements, such as in medical diagnostics in order to avoid any cross-contamination. The present invention allows for not rearranging the external equipment in connection with replacement of the cantilever sensor. An even further advantage is since the radiation is reflected off the reflector end of the cantilever instead of off the top surface, any effects due to structural and chemical changes occurring on the cantilever surface when molecules bind to the cantilever is reduced or even avoided. An even further advantage is that the optical sensor of the present invention is more flexible and stable than sensors using the cantilever as the waveguide, since in such systems the waveguide becomes sensitive to changes in the refractive index of the surrounding medium and to surface stress changes occurring on the cantilever when molecules bind to the cantilever/waveguide. Any such effects are avoided in the present system since the radiation is reflected off the cantilever end.

The radiation structure may be a waveguide, such as a passive or active waveguide. The radiation structure and the receiving structure may be the same waveguide, in which case the receiving structure may also be a waveguide. It is an advantage that the waveguide may be used both as a radiation structure and as a receiving structure, since only one radiation guiding element is thereby needed. The radiation structure may also be an radiation source, such as a laser diode an LED or other radiation sources. In this case, the receiving structure may in an embodiment be an independent structure positioned so that it may receive the radiation reflected off the reflector end. In another embodiment, may a diode such as an LED, be operated both as an emitter and as a detector so that the radiation structure and the receiving structure is embodied by the same device.

The end section of the radiation and/or receiving structure may be shaped so as to provide a lens, e.g. an entrance and/or exit lens. The shape of the lens may be so that light is directed towards the reflector end in an efficient way, as well as to ensure an efficient collection of radiation reflected from the reflector end.

Radiation may be in the form of electromagnetic waves. The electromagnetic waves preferably propagate within the radiation structure and/or the receiving structure due to a higher index of refraction of the material of the radiation structure and the receiving structure in relation to the surrounding material. The surrounding material may be a polymer material and possible air, but it is envisaged that any cladding may be used that allows for confinement of the electromagnetic waves in the radiation structure and the receiving structure, and possible also in any other structures attached to or coupled to the radiation structure and the receiving structure.

The waveguide may be a single or multimode waveguide both in the horizontal and vertical direction, thus the height and the width of the waveguide may be selected so that only a single or alternative multiple modes may be confined in the waveguide.

The radiation structure and the receiving structure, e.g. in the form of a waveguide, may be selected to have the same height as the height of the cantilever. Hereby may the waveguide and the cantilever be formed in one step without the need for additional steps reducing or increasing the height of the waveguide.

The radiation structure and the receiving structure may be adapted with an entrance slit, e.g. a tapered section of the radiation structure and the receiving structure may be provided. The structure may be optimized so that the electromagnetic waves are coupled out of the radiation structure and into the receiving structure without significant losses.

The sensor may be a multiple use system or it may be a single-use system.

At least part of the substrate, the cantilever and the waveguide may be one monolithic element, and thus a simple manufacturing process may be provided, not requiring each part of the system to be manufactured in more or less separate process steps on the same substrate.

At least one of: at least part of the substrate, the cantilever and the waveguide may comprise the same main material, the main material may be a polymer-based material or a material comprising Silicon. It as an advantage to use Silicon since Silicon is a well-known and well characterized material for use in cantilever-based systems as well as optical systems. The use of polymer material is advantageous since the fabrication process is rendered simple, cheap, fast and flexible. It is an advantage that a cheap device may be provided, e.g. since a cantilever array may be used to measure chemical and/or biological substances which may be difficult to, time consuming to or even toxic to clean off a device, rendering it desirable to provide a disposable device.

### The material of the polymer-based material may be selected from the group consisting of:

SU-8 based polymers, such as XP SU-8 polymer, polyimides or BCB cyclotene polymers, parylene, polystyrene, cyclic olefin copolymer (COC) polymers, polymethylmetacrylate (PMMA) and polydimethylsiloxane (PDMS).

The reflector end of the cantilever may define a plane substantially perpendicular to the longitudinal direction of the cantilever, so that radiation incident on the reflector end is directed back in the direction substantially perpendicular to the plane.

The reflector end may define a surface optimized for directing the reflected radiation towards the receiving structure, for example the surface may be curved, such as concave surface so that the reflected radiation is focussed in a point in a plane of the receiving structure.

The reflector end may be inclined, so that a surface of the reflector end forms an angle with respect to the longitudinal direction of the cantilever beam.

The shaping of the reflector end may e.g. be performed by means of a stamp imposing a specific shape onto the reflector end.

The reflector end may be structured, for example a grating, protrusions, a stepped surface, etc. may be imposed on the reflector end. Such a structuring may increase the reflectivity and/or the directionality of the reflector end.

An end-section of the reflector may include a grating, e.g. refractive index modifications may have been provided in the end-section of the cantilever. Such a grating or modifications may increase the reflectivity and/or the directionality of the reflector end.

The reflector end may be coated by at least one reflecting layer. The reflecting layer may be a layer of Au, Ag, Pt, Pd, Al, Cr, Ti, Cu, Ru, Rh, or any combination or alloying of such or other metals. The layer may be provided by vapour deposition, precipitation, laser ablation, electron beam evaporation, electro-plating, shadow masking, or any other suitable technique for providing a metal layer. The coating layer may have a thickness between a few nanometres to a few hundreds nanometres.

The cantilever may be functionalized for selective deflection for a specific or a group of molecular species. The functionalization of the cantilever may be provided by a coating layer, or by one or more coating layers. The one or more layers may comprise a metal layer and/or a molecular layer and/or a salt layer, the metal layer may be a first layer, whereas the molecular layer and/or salt layer may be a first or a second layer, the second layer being deposited onto the first layer. The molecular layer may be a layer of receptor molecules, capable of selectively binding specific molecules, such as macro-molecules, bio-molecules, DNA, amino acids, proteins, cells, various drug molecules, constituents of explosives, traces of toxins, warfare agent, etc. The at least second layer may be a self-assembled layer, such as a self-assembled monolayer or multilayer.

The cantilever may comprise an actuator element for actuating the cantilever. The actuator element may be provided by piezo-resistive element which actuates, e.g. bends upon a voltage or current change of the element. Such a piezo-resistive element may also be provided as a supplementary sensor element for detecting a deflection of the cantilever.

In an embodiment may the cantilever be actuated by means of an induced strain. For example from a bi-morph effect relating from a temperature dependent expansion coefficient of different layers of the cantilever.

The waveguide may be coupled to an optical fibre. This is advantageous since by coupling the waveguide to an optical fibre, easy attachment to external equipment may be provided. The waveguide may be coupled to a radiation source and/or a detector.

The optical sensor may further comprise a lid thereby providing a closed fluid channel.

The lid may comprise a receiving structure e.g. in the form of a radiation detector, such as a CCD device or position sensitive photodiode (PSD). The radiation may after being reflected from the reflector end be directed towards the radiation detector. This may be enabled by providing the cantilever with an inclined reflected end.

The sensor system may comprise an array of cantilevers, such as a parallel or a serial array of flexible structures, wherein radiation reflected from a specific reflector end can selectively be detected. Each cantilever may be coupled to a separate or a shared opening or fluid channel. The support may comprise channels, and an array of flexible structures may be provided so that each channel contains one cantilever, or an array of cantilever may be provided so that each channel contains an array of cantilevers. Furthermore, at least two of the flexible structures in the array may be provided with different mechanical properties and/or chemical properties. The provision of an array may provide an optical sensor capable of sensing a multitude of different target substances.

The opening may define fluidic channel for passing a gas or a liquid through, so that a sensor system including inlet channels and outlet channels may be provided. The channels may be microfludic channels. The fluidic channel may form part of a larger analysis system comprising one or more analysation parts and a number of fluidic channels, mixers, pumps, separation channels, etc. and the fluid may be flowing in the fluidic channel during analysis, or the fluid may be held in the fluidic channel during analysis. Alternatively, the fluidic channel may be used as a cuvette. Hereby, no other pumps, mixers, etc. may be necessary in order to perform the analysis.

In an embodiment, the sensor system of the present invention may be provided as a micro total analysis system (µTAS), the micro total analysis system further comprising an integrated radiation emitting device and/or an integrated radiation detector. It is an advantage of the present invention that it may be provided both as a sensor system for attachment to external equipment and as a part of a µTAS.

According to a second aspect of the invention there is provided a method of measuring a deflection of a cantilever, the cantilever being part of an optical sensor, the optical sensor comprising:
- a substrate having an opening, a first portion and at least a second portion;
- a cantilever suspended over the opening, the cantilever being supported by the substrate along at least the first portion, the cantilever having a free hanging reflector end facing the second portion;
- a radiation structure positioned at the second portion; and
- a receiving structure;
wherein the method comprising:
emitting radiation from the radiation structure towards the reflector end;
receiving the radiation reflected from the reflector end; and deducing a deflection of the cantilever from a measurement of the received radiation.

The optical sensor may be an optical sensor according to the first aspect of the invention.

A first position of the cantilever may be set as a reference position, so that radiation received from the cantilever in the first position is set a reference level indicative of the cantilever being in the first position. The deflection may be deduced from a difference in detected radiation between the cantilever in the first position and in a second position. The first position may be a rest position of the cantilever, whereas the second position may be a position where the cantilever is deflected.

A first frequency of the cantilever may be set as a reference frequency, so that radiation received from the cantilever oscillating with the first frequency is set a reference frequency indicative of the cantilever oscillating with the first frequency. The amount of molecular binding may be deduced from a frequency shift by monitoring the oscillation frequency after molecular absorption of the cantilever with respect to the first frequency. The first frequency may be a resonant frequency of the cantilever.

According to a further aspect of the present invention is a process for manufacturing the sensor system according to the first aspect of the invention provided. The process comprising:
- providing on a first substrate a first layer of a first material,
- masking the first material to indicate a pattern,
- defining the pattern by way of etching or developing to form at least one cantilever and
- providing on the first layer a second layer of a second material,
- masking the second material to indicate a pattern,
- defining the pattern by way of etching or developing to form at least an opening in the second layer and
- providing a second substrate of a second material, and
combining the first and the second substrate.

The process may also include the provision of other structures in the first and/or second substrate, such as fluid channels, walls, inlet(s), outlet(s), etc.

Also a lid may be provided to the fluidic system, and optionally may an intermediate layer be provided between first substrate and the first layer, as well as onto the second substrate. The intermediate layer may be a layer of flexible polydimethylsiloxane (PDMS) or SU-8.

The first material and/or second material is a radiation definable polymer, and wherein the process further comprises the steps of
- patterning the radiation definable polymer through exposing to radiation,
- developing the patterned radiation definable polymer.

The radiation definable polymer may be exposed using e-beam, I-line, X-rays or near-UV lithography.

A radiation definable polymer is a polymer which in the unexposed state is sensitive to radiation so that the radiation definable polymer may be defined, that is in a specific form or shape, by irradiating parts of the polymer while leaving other parts unexposed. During exposure or by further processing, such as by heating or baking, either the exposed or the unexposed parts (positive or negative process) become cross-linked where after the cross-linked polymer is no longer radiation definable and thus no longer radiation sensitive.

It is an advantage to being able to use standard photolithography, since it may reduce the complexity of the fabrication process and thus further reduces the cost of the final sample. And since the costs of e.g. single use samples need to be reduced in order to allow for widespread use of such single use devices, reduction of the manufacturing costs are an essential need for the continued growth of the market for such devices.

The first and/or second substrate and/or the lid may be of glass, Pyrex, polymer, ceramic, plastic, a semiconductor, such as GaAs, GaInAsP, preferably such as Silicon. The first and/or second substrate may be provided with a release layer, such as a Fluorocarbon (FₓC_{y}) layer.

The first layer may be a layer of SU-8 and the second layer may be a layer of polymethylmetacrylate (PMMA), polydimethylsiloxane (PDMS) substrate, SU-8 like polymers, such as the polymer mr-L from Micro Resist Technology GmbH.

The fabrication process may also include steps of shaping the reflector end of the cantilever, e.g. a stamp may be provided to impose an inclination of the reflector end, a grating or other shaping of the end face.

In an alternative process for manufacturing the sensor system, the process is a moulding technique wherein the first material is provided into a mould so that at least one of: at least part of the substrate, the cantilever and the waveguide comprise the same main material is formed in one piece.

The moulding technique may be an injection moulding technique or an embossing moulding technique. The moulding may be a sequential moulding process. A sacrificial layer, or anti-stiction layer may be provided to the mould so as to facilitate release of the moulded system. The moulding process may include injection into the mould at high pressure, and possible at elevated temperature. The mould may be fabricated in Silicon, in a metal, in an oxide or in any other suitable material.

In general may the sensor be fabricated using additional processes known from the semiconductor industry, such processes including spin-coating, baking, wet- and dry etching, physical- and chemical vapour deposition, doping, etc. Also such fabrication steps as: imprinting, laser machining and micromilling, etc may be employed.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 schematically illustrates an optical sensor in accordance with an embodiment of the invention;
FIG. 2 schematically illustrates a side-view of an optical sensor in accordance with an embodiment of the present invention;
FIG. 3 schematically illustrates a side-view of an optical sensor in accordance with another embodiment of the present invention; and
FIGS. 4A and 4B illustrate two embodiments of an optical sensor provided with an integrated radiation source;
FIGS. 5A to 5D schematically illustrate different mechanisms for deflecting a cantilever;
FIGS. 6A to 6I illustrate an embodiment of a fabrication process; and
FIGS. 7A and 7B illustrate optical images of cantilevers and waveguides of an optical sensor.

### DESCRIPTION OF EMBODIMENTS

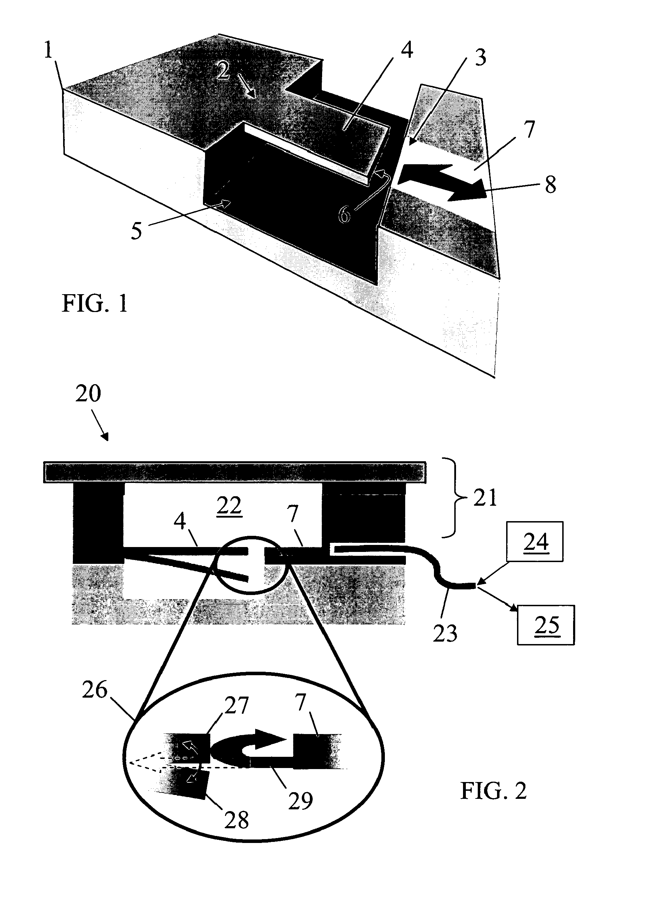

An optical sensor in accordance with an embodiment of the invention is illustrated in FIG 1. The sensor comprises a substrate 1, the substrate supporting a cantilever 4 that can be used for the detection of molecular species in both liquids and gases by either using the static (bending) or dynamic (resonance) mode combined with the integrated readout method of the present invention. The substrate is having an opening 5 over which the cantilever is suspending. The opening may e.g. be part of a liquid handling system, such as part of a fluid channel. The fluid channel may e.g. be a micro-channel. The cantilever is supported by the substrate 1 along at least a first portion 2. The cantilever having a free hanging reflector end 6 opposite to the support area or first portion 2, the reflector end facing a second portion 3 of the substrate.

A radiation structure 7 is positioned at the second portion 3 of the support for directing or emitting radiation towards the reflector end. The radiation structure may be an emitter structure such as a lasing waveguide, typically the radiation structure is a passive waveguide for directing radiation from a radiation source to the reflector end. In the following, the radiation structure is exemplified as a passive waveguide. The waveguide may be a two-way waveguide allowing propagation of radiation waves in two directions as indicated by the two-way arrow 8. In the two-way configuration, the waveguide 7 is both the radiation structure and the receiving structure, i.e. the waveguide is both guiding radiation waves towards the reflector end 6, as well as receiving and guiding the radiation that is reflected off the reflector end. The waveguide may be coupled to a detector for measuring the received radiation. Such a detector is not shown in FIG. 1.

The size of the optical sensor as well as any part of the sensor may depend upon a specific application. In general may the sensor be in the centimetre range, such as with a dimension of 0.5 cm times 1 cm. The sensor may be larger, e.g. for µTAS systems or array systems, the system may also be smaller, since the cantilever, opening, waveguide etc. typically is in the micrometer range. The length of the cantilever may typically be in the range of 50 to 500 µm, however the length may be as large as a few mm. The thickness of the cantilever may be in the range of 1 to 5 µm and the width may be in the range of 5 to 200 µm. The opening may have a depth of 10 to 100 µm, and in the situation where a lid is provided (see FIG. 2) the part of the channel above the cantilever may have a similar depth so that the height of an entire optical sensor may be in the range of 25 to 200 µm. A distance between the reflector end and a front face of the radiation structure or the receiving structure may be in the range of 50 nm to 100 µm, such as 5 to 50 µm. The radiation structure or the receiving structure may have a rectangular cross section with a width between 1 and 25 µm, such as 5 to 10 µm. The width of the radiation structure may be chosen to be similar to the width of the cantilever. In a situation where an array of cantilevers is provided, the cantilevers may be spaced with a distance of 5 to 50 µm. The size ranges provided above should not be construed limiting to the scope of protection, but taken only as illustrative examples of size ranges.

FIG. 2 schematically illustrates a side-view of an optical sensor 20 in accordance with an embodiment of the present invention. FIG. 2 illustrates in addition to the substrate of FIG. 1 a lid or lid structure 21. A closed channel 22 is defined by the opening of the substrate in combination with the inner walls of the lid structure. The waveguide 7 is coupled to an optical fibre 23, the optical fibre is in this embodiment position in an opening of the sensor. The optical fibre may be coupled to both to a radiation source 24 (e.g. a laser source) for coupling radiation into the waveguide and to an optical detector 25 for measurement of the radiation reflected off the reflector end of the cantilever.

The optical circuit (the waveguide and the optical fibre, etc.) and the cantilever are structured in the same plane, so that the cantilever in a first position or rest position is positioned in the plane of the waveguide. The principle of measuring a deflection of the cantilever is illustrated in the blow-up denoted 26 of the cantilever reflector end and the cantilever. The readout is based on the principle of reflection, in the rest or equilibrium position 27 the maximum of light is reflected, as the cantilever moves away from the equilibrium position, less and less radiation is reflected, until the cantilever is in such a bended configuration that no or virtually no radiation is reflected 28. The reflection of the radiation emitted from the waveguide 7 is illustrated by the arrow denoted 29.

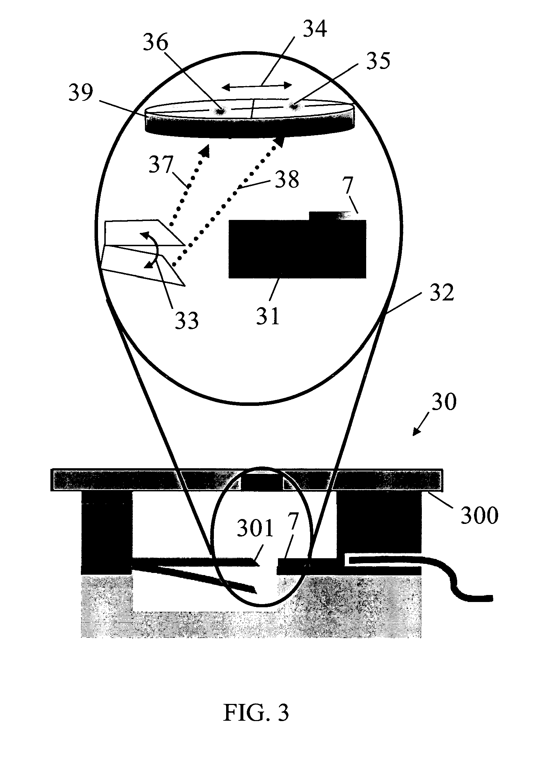

FIG. 3 schematically illustrates a side-view of an optical sensor 30 in accordance with another embodiment of the present invention

In the embodiment illustrated in FIG. 3, the reflector end is inclined, so that radiation 31 emitted from the waveguide 7 is reflected in a direction dictated by the specific inclination. The blow-up denoted 32 illustrates the waveguide end 7, and the cantilever in two different bending states. When the cantilever bends, e.g. as illustrated by the arrow denoted 33, the resulting spot of the reflected beams 37, 38 will also move 34 in a given plane, e.g. a plane 300 defined by the lid. In the illustrated embodiment a position sensitive detector is incorporated in the lid, so that a spot movement, and thereby a bending of the cantilever can be detected.

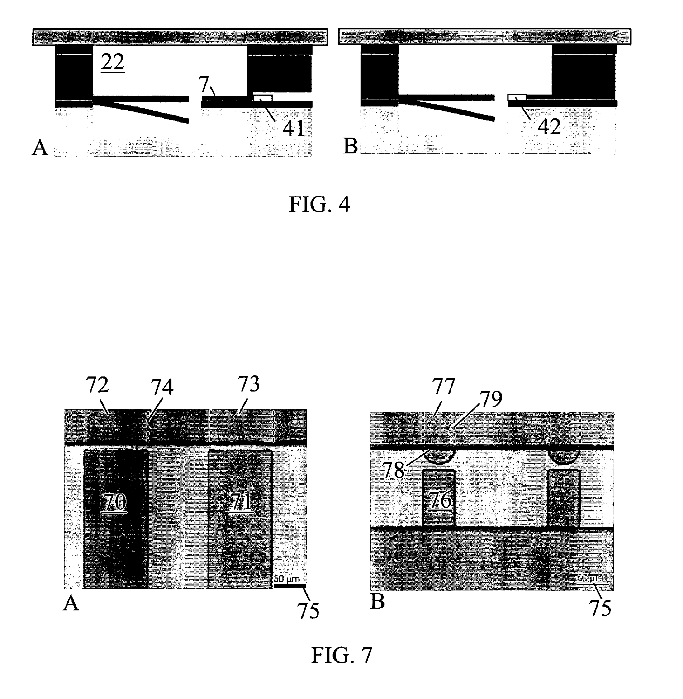

FIGS. 4A and 4B illustrate two embodiments of an optical sensor provided with an integrated radiation source and possible radiation detector. In FIG. 4A, the waveguide 7 is coupled to radiation source, such as a laser diode. In this embodiment, the radiation source is not in direct contact with any fluid in the channel 22, especially for detection of substance present in a liquid may it be necessary that the radiation source is coupled to the reflector end via a waveguide, so direct contact between the source and the liquid is avoided. However, for detection of substances in a gaseous ambient it may be possible to place the radiation source 42 so that radiation emitted from the source to the reflector end is emitted so that the radiation is not passing through a waveguide. This is illustrated in FIG. 4B. In FIGS. 4A and 4B only a radiation source 41, 42 is illustrated, it is however to be understood that the radiation source may also act as a detector, the detector may also be placed in the lid as illustrated in FIG. 3. Other placements of the radiation source may be envisioned.

In general molecular layers are known to induce surface stress when they bind to a surface, due to van der Waals, electrostatic or steric interactions. In a situation where receptor molecules is immobilized on one side of the cantilever the cantilever deflects due to a difference in surface stress on the two sides of the cantilever.

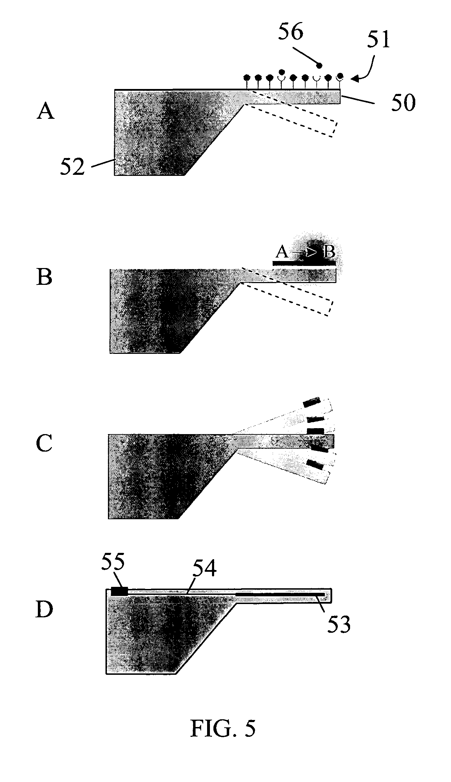

FIGS. 5A to 5D schematically illustrate different situations where a cantilever is deflected. In the Figures a cantilever 50 attached to a platform 52 is seen from the side. In FIG. 5A the cantilever 50 is coated on one side by a molecular recognition layer 51. Upon immobilization of receptor molecules 56, the difference in induced surface stress will cause the cantilever to bend. By selecting appropriate layers for functionalizing the cantilever, the presence of various molecules in the solution may be selectively detected.

FIG. 5B schematically illustrates a bending caused by a change of temperature in the surroundings of the cantilever. A first molecular species A is bound to the cantilever, but upon a temperature change, the molecular state change, e.g. the molecules react with other molecules in the ambient, the molecules starts to adsorb or desorb, so that surface stress change is induced, causing the cantilever to deflect.

In connection with FIGS. 5A and 5B static bending (static mode) of the cantilever is discussed. However, the cantilever may also be operated in the dynamic mode. In dynamic mode detection, the cantilever is oscillated, e.g. by means of a piezo-oscillator attached to the platform, the bending of the cantilever is monitored e.g. by measuring the oscillation frequency of the reflected light. From the measured signal, the changes in the resonant frequency of the cantilever from the immobilization of molecules onto the cantilever is deduced. The resonance frequency of a cantilever depends, inter alia, on the cantilever mass, near environment viscosity and surface stress.

FIG. 5D illustrates an embodiment where the cantilever comprises a strain sensor 53. The strain sensor may be embedded in the cantilever. The strain sensor is connected with connection means 55 to output electrodes or terminals 55 for electrical access to the strain sensor from the outside. The terminals or the connection means may also be directly attached to a signal processor, such as an electronic circuit.

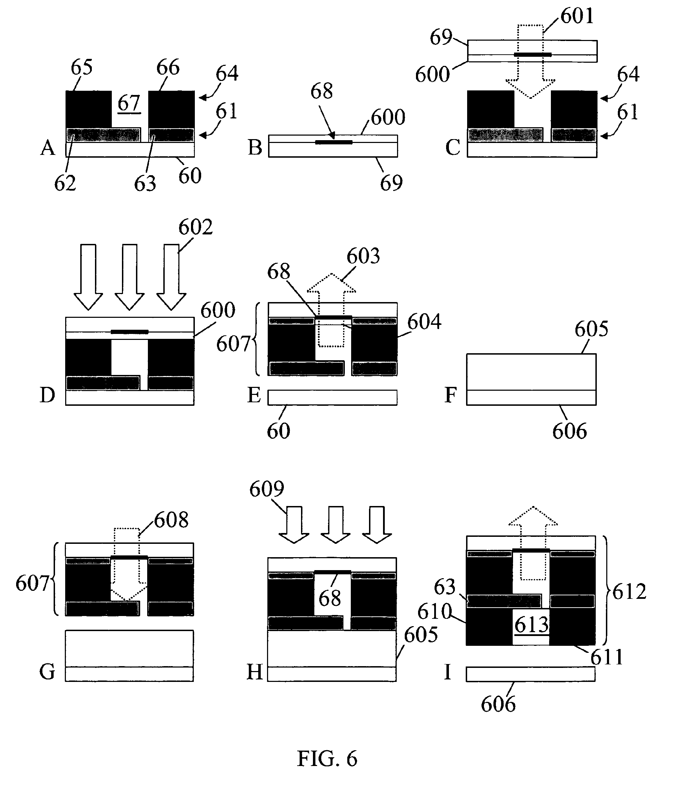

FIGS. 6A to 6I illustrate an embodiment of a fabrication process. FIG. 6A illustrates a first series of steps where a first layer 61 of 5 µm SU-8 is provided on top of a Fluorocarbon (FₓC_{y}) coated Si substrate 60, or first substrate, such as a Si wafer. The FₓC_{y} coating may be a layer of 30 nm plasma deposited F₄C₈, F₆C₁₂, or other suitable FₓC_{y} coating. The coating or release layer may be provided so that the polymer sensor may easily be removed from the substrate at a later stage. The SU-8 layer is patterned by means of UV photolithography so that a first section 62 and a second section 63 are provided. The first section being the cantilever in the final sensor and the second section being the waveguide in the final sensor. The end portion of the second section 63 may be provided with a specific shape, so as to provide a lens, see FIG. 7 for further details regarding the lens. A second layer 64 is provided on the first layer, the second layer being a 20 µm layer of a cladding material. The second layer is patterned by UV lithography so that a first part 65 and a second part are provided 66 in an etching or developing process. The layer denoted 64 may be provided in the material mr-L, however other polymer materials may be used, such as PMMA or PDMS. The first and second parts forming an opening, the opening e.g. providing a part of a fluid channel 67 in the final sensor. The layer 64 may be provided in a material with a lower refractive index than SU-8 so that the layer may act as a cladding layer for the waveguide 61.

In FIG. 6B a Pyrex substrate 69 is provided with a shadow mask being an Au mask 68 and a thin layer of an uncross-linked SU-8 layer 600. The Pyrex substrate 69 is, as illustrated in FIG. 6C, aligned and bonded to layer 64 of the structure supported by the Si substrate 60. The bonding process may be done at an elevated temperature, such as 90 °C, while exerting a pressure 601 of 1000 N for 45 minutes. The bonding may be done in an evacuated ambient to avoid or diminish air bubbles in the interface between the layer 600 and the top surface of the layer 64. A vacuum of 1E-4 mbar may be used, however a higher or lower pressure may alternatively be applied.

In FIG. 6D, the structure is exposed to UV light 602 for 30 seconds followed by an post exposure bake (PEB) process, in order to harden and cross-link the SU-8 layer.

In FIG. 6E, the structure is removed 603 from the Si substrate, and the non-exposed SU-8 material 604 below the Au plate 68 is developed.

In FIG. 6F a 20 µm layer 605 of a cladding material is provided e.g. in a spin coating process onto a FₓC_{y} coated Si substrate 606. The layer of cladding material 605 is preferentially of the same material as the layer denoted 64 in FIG. 6A. In this way the same cladding material surrounds the waveguide 63, thereby centring the light in the waveguide.

In FIG. 6G, the structure 607 of FIG. 6E is bonded to the cladding material of FIG. 6F. The bonding process may be done at an elevated temperature, such as 90 °C, while exerting a pressure 608 of 100 N for 30 minutes. Again, the bonding may be done in an evacuated ambient to avoid or diminish air bubbles in the bonding interface.

In FIG. 6H, the cladding material is exposed to UV light 609 for 70 seconds and post exposure baked, so that the cladding material 605 cross-links. The Au plate acts as a shadow mask, so that a first and a second section 610, 611 are cross-linked.

In FIG. 6I, the structure 612 is separated from the Si substrate 606 and the un-exposed material 613 is developed.

A lid may be provided to the sensor in one or more subsequent steps.

FIGS. 7A and 7B illustrate optical images of cantilevers and waveguides of an optical sensor.

FIG. 7A illustrates an optical image of two cantilevers 70, 71 and waveguides 72, 73. No contrast is present between the waveguide and the surrounding material, and dashed lines 74 have been added to indicate the boundaries. The size bar 75 indicates a unit of 50 µm.

FIG. 7B illustrates an optical image of another embodiment of a sensor having two cantilevers 76 and waveguides 77. Again dashed lines 79 have been added to indicate the boundaries between the waveguide and the surrounding material. In this embodiment, the end section of the waveguide, or more generally the radiation or receiving structure, has been provided with a semicircular lens 78. The lens may be provided in order to optimize the in or out coupling of radiation from the waveguide. The lens may be provided in the same processing step as the waveguide, and the thickness of the lens is the same as the thickness of the waveguide. The termination of the waveguide need not be semicircular, other shapes may be envisioned, such as (semi)polygonal.

Possible applications of the present invention include:
Molecular diagnosis
   - DNA biosensors
   - Immunoassays
   - Point-of-care diagnosis
   - Screening of food supplies
   - Veterinary diagnosis
Proteomics
   - Localisation of proteins with in living cells
   - Study of cell signalling pathways
   - Detection of protein-protein interactions
Drug discovery
   - Real-time monitoring of environmental toxins
Homeland security
   - Detection of biological and chemical warfare agents
   - Detection of explosives

The various applications may be rendered possible by choosing the appropriate first and/or second layer. The second layers may be provided using conventional immobilisation chemistry, including coating, photo-activated binding site, inkjet-printer principle, etc. Examples of second layers that may be used in connection with the above-mentioned applications include: single stranded DNA e.g. from disease-associated genes, antigens, nucleic acids, protein, cells, TNT, polymers etc.

It is to be understood that the application of the present invention is not limited to the above-listed examples.

Although the present invention has been described in connection with preferred embodiments, it is not intended to be limited to the specific form set forth herein. Rather, the scope of the present invention is limited only by the accompanying claims.

In this section, certain specific details of the disclosed embodiment such as material choices, geometry or architecture of the device or parts of the device, techniques, measurement set-ups, etc., are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

It will be appreciated that reference to the singular is also intended to encompass the plural and vice versa, and references to a specific numbers of features or devices are not to be construed as limiting the invention to that specific number of features or devices. Moreover, expressions such as "include", "comprise", "has", "have", "incorporate", "contain" and "encompass" are to be construed to be non-exclusive, namely such expressions are to be construed not to exclude other items being present.

## Claims

**1.** An optical sensor comprising:
- a substrate having an opening, a first portion and at least a second portion;
- a cantilever suspended over the opening, the cantilever being supported by the substrate along at least the first portion, the cantilever having a free hanging reflector end facing the second portion;
- a radiation structure positioned at the second portion for directing or emitting radiation towards the reflector end;
- a receiving structure positioned to receive radiation reflected from the reflector end;
wherein the deflection of the cantilever is deduced from a measurement of the received radiation.

**2.** The optical sensor according to claim 1, wherein at least part of the substrate, the cantilever and the waveguide are one monolithic element.

**3.** The optical sensor according to any of the preceding claims, wherein at least one of: at least part of the substrate, the cantilever and the waveguide comprise the same main material.

**4.** The optical sensor according to claim 3, wherein the main material is a polymer-based material or a material comprising Silicon.

**5.** The optical sensor according to claim 4, wherein the material of the polymer-based material is selected from the group consisting of: SU-8 based polymers, such as XP SU-8 polymer, polyimides or BCB cyclotene polymers, parylene, polystyrene, cyclic olefin copolymer (COC) polymers, polymethylmetacrylate (PMMA) and polydimethylsiloxane (PDMS).

**6.** The optical sensor according to any of the preceding claims, wherein the opening defines a fluidic channel.

**7.** The optical sensor according to any of the preceding claims, wherein the reflector end defines a plane substantially perpendicular to the longitudinal direction of the cantilever.

**8.** The optical sensor according to any of the preceding claims, wherein the reflector end defines a surface optimized for directing the reflected radiation towards the receiving structure.

**9.** The optical sensor according to any of the preceding claims, wherein the reflector end is inclined.

**10.** The optical sensor according to any of the preceding claims, wherein the reflector end is structured.

**11.** The optical sensor according to any of the preceding claims, wherein an end-section of the reflector includes a grating.

**12.** The optical sensor according to any of the preceding claims, wherein the reflector end is coated by at least one reflecting layer.

**13.** The optical sensor according to any of the preceding claims, wherein the cantilever is functionalized for selective deflection for a specific or a group of molecular species.

**14.** The optical sensor according to any of the preceding claims, wherein the cantilever comprises an actuator element for actuating the cantilever

**15.** The optical sensor according to any of the preceding claims, wherein the cantilever comprises a sensor element for detecting a deflection of the cantilever.

**16.** The optical sensor according to any of the preceding claims, wherein a distance between the reflector end and a front face of the radiation structure or the receiving structure is in the range of 50 nm to 100 µm.

**17.** The optical sensor according to any of the preceding claims, wherein the radiation structure is a waveguide.

**18.** The optical sensor according to any of the preceding claims, wherein the radiation structure and the receiving structure is the same waveguide.

**19.** The optical sensor according to claim 17 or 18, wherein the waveguide is coupled an optical fibre.

**20.** The optical sensor according to claim 17 or 18, wherein the waveguide is coupled to a radiation source and/or a detector.

**21.** The optical sensor according to any of the preceding claims, wherein the radiation structure is a radiation source.

**21.** The optical sensor according to any of the preceding claims, wherein the end section of the radiation and/or receiving structure is shaped so as to provide a lens.

**22.** The optical sensor according to any of the preceding claims further comprising a lid.

**23.** The optical sensor according to claim 22, wherein the lid further comprising a radiation detector, and where the radiation after being reflected from the reflector end is directed towards the radiation detector.

**24.** The optical sensor according to any of the preceding claims, wherein the sensor comprises an array of cantilevers, wherein radiation reflected from a specific reflector end can selectively be detected.

**25.** Sensor system according to claim 24, wherein at least two of the cantilevers in the array are provided with different mechanical properties.

**26.** Sensor system according to claim 24, wherein at least two of the cantilevers in the array are provided with different chemical properties.

**27.** A micro total analysis system comprising a sensor system according to any of the preceding claims, the micro total analysis system further comprising an integrated radiation emitting device.

**28.** A micro total analysis system comprising a sensor system according to any of the preceding claims, the micro total analysis system further comprising an integrated radiation detector.

**29.** A method of measuring a deflection of a cantilever, the cantilever being part of an optical sensor, the optical sensor comprising:
- a substrate having an opening, a first portion and at least a second portion;
- a cantilever suspended over the opening, the cantilever being supported by the substrate along at least the first portion, the cantilever having a free hanging reflector end facing the second portion;
- a radiation structure positioned at the second portion; and
- a receiving structure;
wherein the method comprising:
emitting radiation from the radiation structure towards the reflector end;
receiving the radiation reflected from the reflector end; and
deducing a deflection of the cantilever from a measurement of the received radiation.

**30.** The method according to claim 29, wherein a first position of the cantilever is a reference position, and wherein the radiation received from the cantilever in the first position is set a reference level indicative of the cantilever being in the first position.

**31.** The method according to claim 30, wherein the deflection is deduced from a difference in detected radiation between the cantilever in the first position and in a second position.

**32.** The method according to claim 29, wherein a first frequency of the cantilever is a reference frequency, and wherein the radiation received from the cantilever with the first frequency is set a reference frequency indicative of the cantilever oscillating with the first frequency.

**33.** The method according to claim 32, wherein a frequency shift is detected by monitoring the oscillation frequency of the cantilever with respect to the first frequency.

**34.** A process for manufacturing the sensor according to claim 1, the process comprising:
- providing on a first substrate a first layer of a first material,
- masking the first material to indicate a pattern,
- defining the pattern by way of etching or developing to form at least one cantilever and
- providing on the first layer a second layer of a second material,
- masking the second material to indicate a pattern,
- defining the pattern by way of etching or developing to form at least an opening in the second layer and
- providing a second substrate of a second material, and
combining the first and the second substrate.

**35.** A process according to claim 34 further comprising the step of providing a lid to the sensor.

**36.** A process according to any of the claims 34-35 further comprising the step of providing a shadow mask onto the second substrate.

**37.** A process according to any of the claims 34-36, wherein an intermediate layer is provided between the first substrate and the first layer and/or onto the second substrate.

**38.** A process according to any of the claims 34-37, wherein the first material and/or second material is a radiation definable polymer, and wherein the process further comprises the steps of
- patterning the radiation definable polymer through exposing to radiation,
- developing the patterned radiation definable polymer.

**39.** A process according to claim 38, wherein the radiation definable polymer is exposed using e-beam, I-line, X-rays or near-UV lithography.

**40.** A process for manufacturing the sensor system according to claim 1, the process being a moulding technique so that at least one of: at least part of the substrate, the cantilever and the waveguide comprise the same main material is formed in one piece.

**41.** A process according to claim 40, wherein the moulding technique is an injection moulding technique or an embossing moulding technique.

**42.** Use of the sensor system according to claim 1, wherein the sensor system is used for detecting the presence of a chemical substance in a gaseous ambient.

**43.** Use of the sensor system according to claim 1, wherein the sensor system is used for detecting the presence of a chemical substance in a liquid environment.

**44.** Use of the sensor system according to claim 1, wherein the sensor system is a disposable item.
